# EUROPÄISCHE PATENTANMELDUNG

(11) **EP 2 586 749 A1**
(43) Veröffentlichungstag der Anmeldung: **01.05.2013**
(21) Anmeldenummer: 11008626.1
(22) Anmeldetag: 27.10.2011
(51) Int. Cl.: C02F 3/06, C02F 3/08, B01D 24/00, B01D 24/18

(54) **Selbstspühlende Wasserreinigungsanlage**

(71) Anmelder: Wiccory Investment Limited, 3087 Limassol (CY)
(72) Erfinder: Zhurba, Mikhail G., 143982 Moskovskaya oblast (RU); Govorova, Zhanna M., 143982 Moskovskaya oblast (RU); Govorov, Oleg B., 143982 Moskovskaya oblast (RU)
(74) Vertreter: Jeck, Anton

(57) **Zusammenfassung**

Die Erfindung bezieht sich auf Filteranlagen zur Flüssigkeitsreinigung und kann in der Volkswirtschaft eingesetzt werden. Der technische Effekt besteht in der verbesserten Qualität des zu reinigenden Wassers in einer Wasserreinigungsanlage, in der Sicherstellung einer sparsameren hydroautomatischen Spülung der Beschickung und in einer Senkung der Betriebskosten. Der technische Effekt wird dadurch erreicht, dass die selbstspülende Wasserreinigungsanlage einen Bioreaktor-Vorfilter (2,9), einen Filter (10) mit schwimmenden Beschickungen (12,13) und einen im oberen Teil des Bioreaktor-Vorfilters (2,9) angeordneten Raum (3) mit kegelförmigen Ansatzstücken (4), Diffusoren (7), Lufteintrittsöffnungen (6) und Anschlüssen, ein System zur hydroautomatischen Spülung in Form eines Heberschlauchs (15) und einen Flüssigkeitsverschluss mit zwei Bechern (18,19) enthält. Dabei ist der Bioreaktor als Bioreaktor-Vorfilter (2,9) mit Strahl-Vakuum-Ejektion ausgebildet und entweder koaxial im Filter (10) mit schwimmender Beschickung (13) oder außerhalb dieses Filters (10) angeordnet. Dabei weisen der genannte Bioreaktor-Vorfilter (2,9) und der genannte Filter (10) ein gemeinsames hydroautomatisches System zur Spülung der schwimmenden Beschickungen auf.

## Beschreibung

Die Erfindung bezieht sich auf Filteranlagen zur Flüssigkeitsreinigung und kann im Bereich der Volkswirtschaft angewendet werden.

Aus dem Stand der Technik ist eine selbstspülende Wasserreinigungsanlage mit einem Filter, einem Spülwasserbehälter für reines Spülwasser, einem Rohrleitungssystem, einem Flüssigkeitsverschluss und einem Heberschlauch zum Abheben von Spülwasser bekannt. Der Filter weist eine schwere, körnige Filterbeschickung auf. Der Spülwasserbehälter für reines Spülwasser ist über dem Filter angeordnet. Das Rohrleitungssystem dient zur Frischwasserversorgung und Abführung von Spülwasser. Der untere Strang des Heberschlauchs zum Abheben von Spülwasser ist mit einem Ventil in Form eines Bechers mit einem Wasserableitungsrohr abgesperrt. Der Becher ist teilweise im Wasser in einem Einlaufgehäuse eingetaucht (siehe: V.A. Klyachko, I.E. Apeltsyn, "Wasseraufbereitung zur Industrie- und städtischen Wasserversorgung", Verlag für Fachliteratur, Bereich Bauwesen, Architektur und Baustoffe, M. 1962, S. 366, 367).

Der Mangel dieser Anlage ist das unverzichtbare Vorhandensein eines speziellen Spülwasserbehälters, zusätzlicher Verbindungsrohrleitungen, eines Flüssigkeitsverschlusses und eines Luftabscheiders. Ein weiterer Mangel ist eine verlängerte Spülungsdauer und ein unproduktiver Wasserverbrauch wegen der langsamen Entleerung des Bechers bis zum Zeitpunkt seines erneuten Auftauchens.

Aus dem Stand der Technik ist ein weiterer Filter zur Flüssigkeitsreinigung bekannt. Er enthält ein Gehäuse, einen darin axial angeordneten zylinderförmigen Ringschuss mit schwimmender Filterbeschickung zur Vorreinigung, Beschickung zur Vorreinigung und einen Heberschlauch zum Abheben von Spülwasser mit einem Ladegerät. Das Ladegerät ist in Form von im Ringschuss oberhalb und unterhalb der Beschickung angeordneten Schwimmkörpern ausgebildet. Die Schwimmkörper stellen untereinander fest verbundene Scheiben dar. Die letzte Scheibe dieser Scheiben ist so installiert, dass die untere Reihe und die obere Reihe von Öffnungen aufeinanderfolgend absperrbar sind. Dabei sind der obere Teil des Ringschusses und der untere Strang des Heberschlauchs mit einem Durchlassrohr verbunden (Urheberschein der UdSSR SU1717473A1 vom 05.03.1990).

Der Mangel dieses Filters ist die Anordnung einer steifen, die Scheibenschwimmkörper verbindenden Stange innerhalb der schwimmenden Beschickung des Vorfilters. Dadurch kann ein teilweiser Schutzdurchbruch verursacht werden, wobei eine dicke Schicht der schwimmenden Beschickung vermieden wird. Die weiteren Nachteile sind ein überaus großer Verbrauch von Spülwasser im Durchlassrohr, das den Ringschuss mit dem absteigenden Strang des Heberschlauchs verbindet, und eine verlängerte Spülungsdauer wegen der notwendigen zeitraubenden Luftentfemung aus dem absteigenden Strang des ohne Ventil betriebenen Heberschlauchs.

Der der vorliegenden Erfindung am nächsten kommende Stand der Technik ist seinem technischen Wesen und dem erreichten technischen Effekt nach eine Wasserreinigungsanlage mit einem Bioreaktor. Der Bioreaktor wird mit einem Ansatzstück aus Faserstoff ausgerüstet. Unter dem Ansatzstück ist eine Luftversorgungseinheit angeordnet. Im oberen Teil des Bioreaktors befindet sich eine Sprüheinrichtung. Die Wasserreinigungsanlage enthält ferner einen Ablagerungsspeicher mit Leitblechen, einen Filter mit schwimmender Beschickung, einen Heberschlauch, einen Flüssigkeitsverschluss-Behälter, Versorgungsleitungen für Frisch- und Spülwasser und Ableitungen für Rein- und Spülwasser. Diese Wasserreinigungsanlage ist für die Wasserreinigung nach dem Verfahren der vereinfachten und zwangsläufigen Belüftung und der Biooxidation beim Fließen durch die Schicht der inaktiven schwimmenden Beschickung vorgesehen (s. Patent RU 2144005, 10.01.2000, CO2F 3/00 und B01 D 36/00, 10.01.2000).

Die Mängel dieser Anlage sind ein zu geringer Wasserreinigungsgrad in der Faserstoffbeschickung des Bioreaktors und dessen ungenügendes Auswaschen, eine vergrößerte Menge von Spülwasser nach dem Filter und dem Bioreaktor infolge der fehlenden Einrichtung zum schnellen Auftauchen des Ventils im Flüssigkeitsverschluss und die Anwendung eines Kompressors und eines Luftversorgungssystems für die Faserstoffbeschickung.

Das technische Ergebnis der vorliegenden Erfindung ist eine erhöhte Qualität des zu reinigenden Wassers innerhalb einer Anlageneinheit, die Sicherstellung eines sparsameren hydroautomatischen Auswaschens der Beschickung und eine Senkung der Betriebskosten.

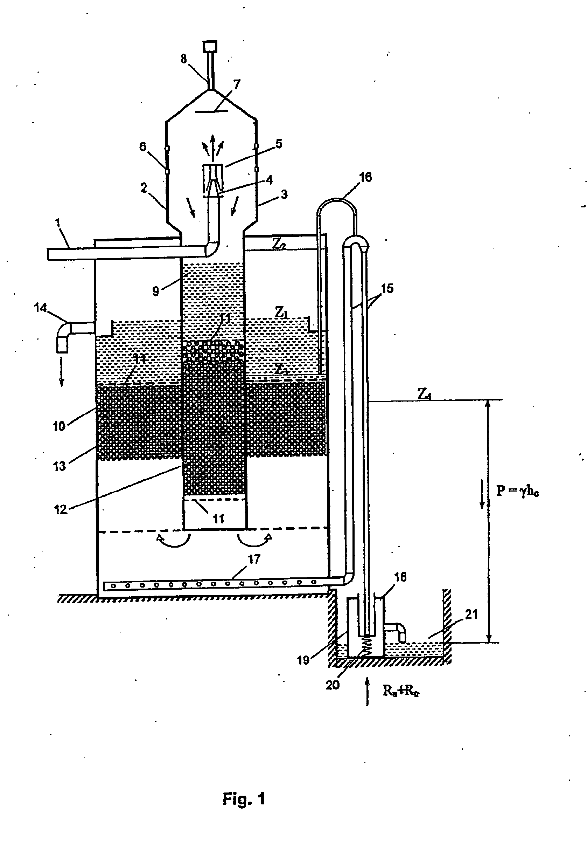

Das technische Ergebnis wird folgendermaßen erreicht. Die Anlage (Fig. 1) besteht aus
- einem Filter mit schwimmender Beschickung mittels eines aufsteigenden Wasserstroms,
- einem im Filter koaxial angeordneten Bioreaktor; der Bioreaktor ist ein Vorfilter mit inhomogener, schwimmender Beschickung und mit absteigender Richtung der Filterströmung; das Auftauchen und das Austragen der Beschickung aus dem Gehäuse wird durch Netze verhindert,
- einem Expansionsraum für Belüftung und Entgasung des zu reinigenden Wassers und des hydroautomatischen Systems zur Spülung der Beschickung,
- einem unteren Wassersammlungssystem und
- Rohrleitungen zur Frischwasserversorgung und zur Filtratableitung.

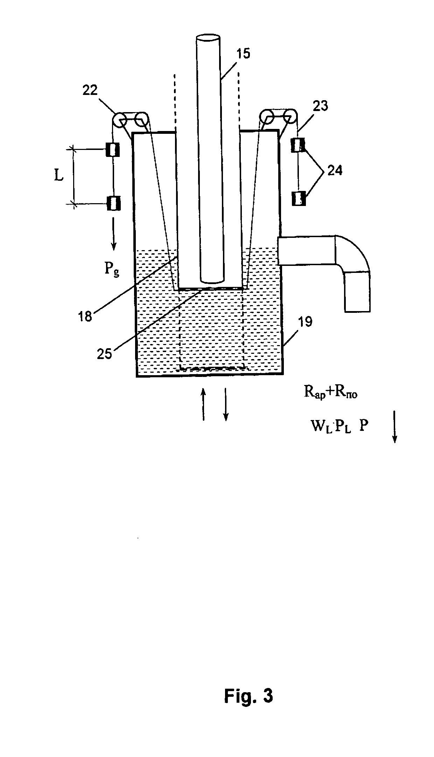

Die Flüssigkeitsverschlusseinrichtung ist als zwei koaxial angeordnete Becher ausgebildet. Der Innenbecher ist teilweise im Wasser eingetaucht. Sein Boden wird mittels einer Feder (Ausgestaltung 1, Fig. 1) oder Gegengewichten (Ausgestaltung 2, Fig. 3) und teilweise aufgrund der archimedischen Auftriebskraft an den absteigenden Strang des Heberschlauchs gepresst. Der Außenbecher ist teilweise mit Wasser gefüllt. Der Außenbecher weist eine Ableitung zur Abführung von Spülwasser in die angrenzende Rinne auf. Der Expansionsraum der Anlage enthält eine geschlossene Strahlenkammer zur Wasserbelüftung und -entgasung. Eine Strahlen-Ejektionskammer ist mit Lufteintrittslöchern und mit einem Prallblech versehen und mittels einer Abgasleitung mit der Außenluft verbunden. Die Ejektionseinrichtung dieser Kammer ist in Form eines oder mehrerer Aufsatzstücke ausgebildet. Das Aufsatzstück wird mit einem Zerstreuer (Diffusor) und einer verjüngten Düse (Konfusor) ausgerüstet, die beide den Strahl ausbilden und das Vakuum im Strahlbildungsbereich verstärken.

Der Bioreaktor-Vorfilter wird mit einer kombinierten inhomogenen, durch Eisen, Mangan und andere Metalloxide modifizierten Kontaktbeschickung gefüllt. Die Beschickung besteht aus dichten Schichten einer grobkörnigen Polystyrolschaum-Beschickung und erweiterten Fließbetten der gleichen Beschickung. Eine derartige Beschickung verstärkt den Vorgang der biofunktionellen Wasservorreinigung und fördert das wirksamere Auswaschen von grobkörnigen Schichten bei gleicher Waschintensität.

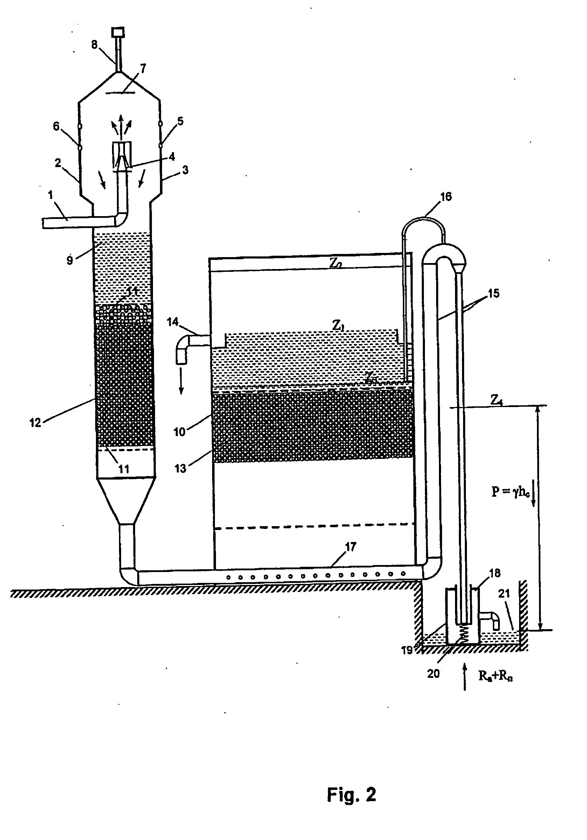

So kann der Bioreaktor-Vorfilter im Einzelnen außerhalb des Filtergehäuses angeordnet werden, und er weist ein gemeinsames Verteilungs- und Sammelsystem auf, das mit dem Heberschlauch und dem Ladegerät verbunden ist (Fig. 2).

Die Wasserreinigungsanlage arbeitet folgendermaßen.

Das Wasser mit den darin enthaltenen gelösten Gasen, Schwebestoffen, Eisen, Mangan und anderen Verschmutzungen wird unter Druck über eine Rohrleitung 1 in einen Bioreaktor-Vorfilter 2 gefördert. Im oberen Teil des Bioreaktor-Vorfilters 2 befindet sich ein Expansionsraum 3 mit einem Ansatzstück 4, das in einer Ejektionskammer 5 angeordnet ist. Aufgrund von Lufteintrittsöffnungen 6, dem Ansatzstück 4 und der Ejektionskammer 5 wird das unter Druck gepumpte Wasser einer intensiven Ejektions- und Strahl-Entgasung und -Belüftung ausgesetzt. Danach wird das Wasser von einem Strahlenprallblech 7 zurückgeworfen und über den Expansionsraum 3 verspritzt. Danach kommt das Wasser in eine modifizierte schwimmende, inhomogene Kontaktbeschickung 12 eines Bioreaktor-Vorfilters 9. Diese Kontaktbeschickung 12 weist in ihren oberen Schichten einen dichten Zustand und in ihren unteren Schichten einen "quasiflüssigen" (ausgedehnten) Zustand auf und wird im Gehäuse der Kontaktbeschickung 12 gegen ein Aufschwimmen und einen Austrag mit Hilfe von Netzen 11 gehindert. Die aus dem Wasser ausgeschiedenen Gase werden über eine Abgasleitung 8 ins Freie abgeleitet.

Während der Ansammlung der Ablagerungen einschließlich der abgefangenen Verschmutzungen und mit der Zunahme der Druckverluste in der Beschickung 12 und einer Beschickung 13 hat der Bioreaktor-Vorfilter 2 zugleich die Funktion eines Filtrationsgeschwindigkeitsreglers. Nach der Vorreinigung in der Beschickung 12 des Bioreaktor-Vorfilters 9 wird das Wasser anschließend von unten hinauf über die feinkörnige Beschickung 13 mittels eines Filters 10 gefiltert, in einer Wassersammelrinne gesammelt und über eine Rohrleitung 14 in einen (nicht dargestellten) Reinwasserbehälter geleitet. Mit der Ansammlung der Ablagerungen in der Masse der Beschickungen 12 und 13 nimmt deren Widerstand zu. Das führt zu einer Wasserspiegelerhöhung im Bioreaktor-Vorfilter 9 bis zu einer Z₂- Markierung. Nachdem der Wasserstand die Markierung Z₂ erreicht hat, fließt das Wasser aus dem aufsteigenden Strang des Heberschlauchs 15 in den absteigenden Strang hinüber. Der absteigende Strang ist unten mit einem Becher 18 abgesperrt. Der Becher 18 ist aufgrund der Wirkung der archimedischen Auftriebskraft halb eingetaucht. Diese Auftriebskraft wird durch die von diesem Becher 18 aus dem koaxial damit angeordneten Außenbecher 19 verdrängte Wassermenge erzeugt. Neben der archimedischen Auftriebskraft ist der Becher 18 mittels einer Feder 20 an den absteigenden Strang des Heberschlauchs gepresst. Das untere Ende der Feder 20 ist am Boden des Bechers 19 befestigt.

Gemäß einer anderen Ausgestaltung (Fig. 3) kann ein Gegengewichtssystem vorgesehen werden, das für den Aufstieg des völlig mit gebrauchtem Spülwasser gefüllten Innenbechers und die Absperrung des unteren Rohrteils des absteigenden Strangs des Heberschlauchs konzipiert ist, wenn der Wassereintritt aus dem absteigenden Strang des Heberschlauchs in den Becher 18 aufhört. Sobald der Sollwasserspiegel Z₄ im absteigenden Strang des Heberschlauchs erreicht ist, wird der Wassersäulendruck darin P=γh die gesamte archimedischen Auftriebskraft R_{A} und der Feder Rn überschreiten. Als Ergebnis sinkt der Becher 18 prompt ab. Nun ist seine tiefe Lage dafür ausreichend, dass das Wasser aus dem Heberschlauch in einen Becher 19 fließt. Dadurch wird der Heberschlauch geladen. Die Spülung der Beschickungen 12 und 13 bei absteigendem Wasserstrom aus den Überfilterräumen des Bioreaktor-Vorfilters 9 und des Filters 10 fängt an und läuft, bis der Wasserspiegel im Filter die tiefere Markierung Z₃ erreicht und das Vakuum über eine Luftleitung 16 beseitigt wird. Danach nehmen die Beschickungen 12 und 13 ihre jeweiligen ursprünglichen Stellungen ein, und der Wasserreinigungsvorgang beginnt von neuem.

Das Ladegerät mit den Gegengewichten (Fig. 3) arbeitet folgendermaßen.

Die Gegengewichte 24 sind so ausgelegt, dass sie den Becher 18 mittels einer Absperrklappe (Schmetterlingsventil) 25 mit Gummidichtung dicht an den unteren Teil eines Rohrs des Heberschlauchs 15 unter Berücksichtigung der archimedischen Auftriebskraft gedrückt halten. Bei Überschreitung des Wassersäulendrucks in diesem Rohr (15) (P=γh>Rₙ+R_{A}) sinkt der Becher 18 hinab. Die Luft wird aus dem absteigenden Rohr entfernt, und die Spülung beginnt. Nach dem Spülungsende schwimmt der Becher infolge des durch Gegengewichte 24 aufgebauten Überdrucks auf. Die Gegengewichte 24 sind mit einer Scheibe 25 oberhalb des Wassersäulengewichts im Becher 18 und oberhalb des Bechers selbst mittels eines Seils 23 über Baueinheiten 22 (Umlenkrollen) verbunden.

Somit sind der Bioreaktor-Vorfilter gemäß der Erfindung mit der schwimmenden, modifizierten Beschickung, die im dichten und ausgedehnten Zustand bei absteigendem Wasserstrom funktioniert, und der Filter mit inerter, schwimmender Beschickung mit der aufsteigenden Filterströmung in einem (Fig. 1) oder in verschiedenen Gehäusen (Fig. 2, Ausgestaltung 2) mit einem gemeinsamen System der hydroautomatischen Spülung vereinigt. Diese Vereinigung ermöglicht es, den Wirkungsgrad der gründlichen Wasserkonditionierung (Wasserreinigung) zu erhöhen, auf Spülpumpen, Luftverdichter, eine zusätzliche Wasserförderpumpe für den Ejektor und auf die Absperr- und Steuerarmatur sowie auf die Anordnung von zusätzlichen Spülwassermengen im Reinwasserbehälter zu verzichten und somit die Betriebskosten zu senken, den Platzbedarf zu vermindern und den Reinwasserverbrauch für den Eigenbedarf geringer zu halten.

## Patentansprüche

1. Selbstspülende Wasserreinigungsanlage mit einem Bioreaktor und Filter (10) mit schwimmenden Beschickungen (13) und einem oben angeordneten Raum mit kegelförmigen Ansatzstücken (4), Diffusoren (7), Lufteintrittsöffnungen (6) und Anschlüssen (1), mit einem System zur hydroautomatischen Spülung in Form eines Heberschlauchs (15) und mit einem Flüssigkeitsverschluss mit zwei Bechern (18, 19),
**dadurch gekennzeichnet,**
**dass** der Bioreaktor als Bioreaktor-Vorfilter (9) mit Strahlen-Vakuum-Ejektion ausgebildet ist und
**dass** der Bioreaktor-Vorfilter (9) und der genannte Filter (10) dabei ein gemeinsames hydroautomatisches Spülungssystem (22 - 25) der schwimmenden Beschickungen (12, 13) aufweisen.

2. Wasserreinigungsanlage nach Anspruch 1,
**dadurch gekennzeichnet,**
**dass** die kegelförmigen Ansatzstücke Strahlenansatzstücke (4) sind, die in einer Mehrstufen-Diffusor-Ejektionskammer (5) angeordnet sind, wobei diese Mehrstufen-Diffusor-Ejektionskammer über dem genannten Bioreaktor-Vorfilter (9) angeordnet ist und eine verstärkte Luftströmung an die Strahlenansatzstücke (4) sicherstellt.

3. Wasserreinigungsanlage nach Anspruch 1,
**dadurch gekennzeichnet,**
**dass** die Beschickung (12) des genannten Bioreaktor-Vorfilters (9) eine inhomogene, schwimmende Beschickung ist, deren untere feinkörnige Schichten in einem ausgedehnten beweglichen Zustand und deren obere grobkömige Schichten unbeweglich sind.

4. Wasserreinigungsanlage nach Anspruch 3,
**dadurch gekennzeichnet,**
**dass** die genannte schwimmende Beschickung (12) mit Manganoxiden bedeckt ist.

5. Wasserreinigungsanlage nach Anspruch 1,
**dadurch gekennzeichnet,**
**dass** zwischen den Böden des Innenbechers (18).und des Außenbechers (19) des Ladegeräts eine Feder (20) eingebaut ist, die das Aufschwimmen des nach der Spülung mit Wasser gefüllten Innenbechers (18) sicherstellt.

6. Wasserreinigungsanlage nach Anspruch 1,
**dadurch gekennzeichnet,**
**dass** am Boden des Innenbechers (18) ein System aus Gegengewichten (24) installiert ist, das das Aufschwimmen des Innenbechers (18) nach Abbruch des Wassereintritts aus dem absteigenden Strang des Heberschlauchs (15) sicherstellt.

7. Wasserreinigungsanlage nach Anspruch 6,
**dadurch gekennzeichnet,**
**dass** das System der Gegengewichte Baueinheiten (22), ein flexibles Seil (23), Gegengewichte (24) und eine Absperrscheibe (25) einschließt.

8. Wasserreinigungsanlage nach einem der Ansprüche 1 bis 7,
**dadurch gekennzeichnet,**
**dass** der Bioreaktor-Vorfilter (9) koaxial im Filter (10) mit schwimmender Beschickung (13) angeordnet ist (Fig. 1).

9. Wasserreinigungsanlage nach einem der Ansprüche 1 bis 7,
**dadurch gekennzeichnet,**
**dass** der Bioreaktor-Vorfilter (9) außerhalb des Filters (10) mit schwimmender Beschickung (13) angeordnet ist (Fig. 2).
